# EUROPEAN PATENT SPECIFICATION

(11) **EP 1 440 233 B1**
(45) Date of publication and mention of the grant of the patent: **02.06.2010**
(21) Application number: 01274109.6
(22) Date of filing: 01.11.2001
(51) Int. Cl.: F02K 9/38, F42B 39/20

(54) **ROCKET MOTORS WITH INSENSITIVE MUNITIONS SYSTEMS**
RAKETENMOTOR MIT TEMPERATURABHÄNGIGEM SICHERHEITSMECHANISMUS
PROPULSEURS POUR ROQUETTES POURVUS DE MUNITIONS INSENSIBLES

(43) Date of publication of application: 28.07.2004
(73) Proprietor: ALLIANT TECHSYSTEMS INC., Edina, Minnesota 55436 (US)
(72) Inventor: SOLBERG, Mark, A., Bel Air, MD 21015 (US); BLACK, Robert, E., NewarK, DE 19711 (US)
(74) Representative: Altenburg, Udo
(86) International application number: PCT/US2001/048170
(87) International publication number: WO 2003/046359

(56) References cited:
- US-A- 4 597 261
- US-A- 5 129 326
- US-A- 5 786 544
- US-A- 5 813 219
- US-A- 6 094 906

## Description

### BACKGROUND OF THE INVENTION

### 1. The Field of the Invention

The present invention relates to rocket motors, especially for gun-launched projectiles, having insensitive munitions capability according to the precharacterizing portion of claim 1 as known from US-A-6094906.

### 2. Description of the Related Art

Many launchable projectiles, rockets, and rocket stages comprise a forward end, including guidance and munitions, and an aft end rocket motor. These two elements can be formed together, with a common outer case, or they can be separately formed and subsequently joined together. This joining can occur immediately prior to use, in which case the two elements may be separately stored, or the elements can be joined together for storage purposes and be ready for immediate use.

During pre-launch storage, when a rocket motor is ignited inadvertently by external heating, such as a spilled fuel fire, the rocket motor may become propulsive before being properly aimed. When inadvertent ignition is caused by fragment impact that produces unplanned nozzle outlets, the motor may become wildly propulsive in undesired directions. And when such events produce unplanned increases of propellant burning surface area, excessive pressurization may increase the hazard to nearby personnel and property. In light of these dangers, many of today's weapon systems must satisfy certain insensitive munitions (IM) requirements focused on safe storage capabilities.

One way that rocket motors meet IM requirements is by venting the internal pressure caused through inadvertent ignition of the propellant by discharging either the forward or aft closure of the case cylinder. This allows the propellant to burn through a now open end that is relatively large compared to the nozzle throat without generating substantial thrust in any direction and without the threat of the rocket motor exploding and spraying burning propellant and metal case cylinder fragments in numerous directions.

The prior art teaches the use of dual paths for load transfer between features of either closure or between the closure and the motor case cylinder. One such load path may be sized to accommodate relatively small loads that might be experienced during transportation and handling prior to gun launch, and the other to accommodate much larger loads encountered during launch or during rocket motor operation. Focusing on shells that may or may not include rocket motors, U.S. Patent No. 4,557,198 discloses shear pins or locking rings arranged for arming the high load capability load path by axial acceleration during normal launch and disarming the low capability load path. Boissiere, in U.S. Patent No. 5,337,672 (1994), teaches arming of the high capability load path and disarming the low capability load path by gas pressures produced by the round itself. Dolan, in U.S. Patent No. 4,597,261 (1986), Panella in U.S. Patent No. 3,887,991 (1975), Tate in U.S. Patent No. 5,036,658, Koontz in U.S. Patent No. 5,155,298 (1992), Ellingsen in U.S. Patent No. 5,311,820, and Cherry, in Statutory Invention Registration H1144 disclose the use of thermally activated devices of similar intent. Further, Malamas in U.S. Patent No. 4,991,513 discloses use of a vent system that is closed by spin-up at launch. Singer et al. in U.S. Patent No. 6,094,906, discloses a more recent approach for generating a vent path for IM protection.

The safe expulsion of either closure can also be accomplished through the use of a low shear retaining means -- positioned between components of the closure or between the closure and the rocket motor case cylinder -- and a high capability load path that is disarmed until subjected to gun pressure. Should the propellant be inadvertently ignited, the low shear retention means will shear under relatively low internal pressure and allow the entire closure, or a portion thereof, to disengage from the case cylinder. Thus, the internal pressure induced by inadvertent ignition will vent without the dangers associated with premature propulsion or explosion.

One problem associated with many of these conventional IM systems is that they do not pass slow cook off tests. For many conventional IM systems, heating at relatively slow rates of about 6°F/hr (3,3 °C/hr) causes the entire propellant to combust substantially instantaneously prior to activation of the IM systems, producing excess gas which the IM systems are not equipped to handle and safely expel.

In the case of gun-launch missiles, other design criteria that should be taken into consideration pertain to the thermal expansion characteristic of composite solid propellants. Composite solid propellants are one of two general types of solid propellants for rockets. In composite solid propellants, the fuel and oxidizer particles are bound together by a cured rubber matrix. Composite propellants have burning surface areas that may be readily controlled by adjusting the shape of the solid material and the burn rate features of the formulation. The other type of solid propellants are compressed powders. For compressed powders, virtually the entire cumulative surface area of all the particles is available for combustion immediately upon ignition. During the burn of a compressed powder propellant, vastly higher operating pressures prevail than during burn of a like quantity of composite propellants. It follows that compressed powder propellants are generally used only where the gun barrel can withstand the high pressures. When the propellant is to burn after the rocket leaves the gun, generally a composite propellant is chosen.

Typically, a composite solid propellant has a thermal expansion characteristic that is an order of magnitude larger than that of the enclosing or containing structure. A 100°F (56°C) change in operating temperature therefore may produce a propellant volume change of about 2%. Unless the configuration and support arrangement allow deformations to occur, thermal stresses in the propellant may cause fractures, undesired increases of burning surface area, and disasters upon ignition. Common provisions for thermal expansion include a central axial perforation for propellant grains bonded on their outer circumferential surfaces to cylindrical vessels, and completely free outer surfaces for propellant grains bonded at either their forward or aft ends to vessel closure features.

The threat that gun accelerations may pose to the integrity of a propellant charge may be great unless care is exercised over the propellant configuration and means of supporting the propellant. Accelerations imposed within the gun tube upon gun-launched projectiles are hundreds -- even thousands -- of times larger than those for rocket launched projectiles. The tensile and shear strengths and elastic moduli of typical propellants are minuscule in comparison with the containing structure. For this reason, departures from a hydrostatic stress state during gun launch are accompanied by large deformations. At high forward acceleration, the propellant grain tends to completely fill the available volume of the aft end of the containing vessel.

During gun launch, alternatives to the aft end support arrangement for the propellant grain can be grave threats to the integrity of the propellant grain. Indeed, at acceleration levels typical of gun launches, neither the bonded circumferential surface of an axially perforated propellant grain nor an unperforated grain with a bonded forward end is stiff enough to eliminate the aft end support mode unless there is a great deal of empty space within the motor.

It follows that virtually the entire force that accelerates the propellant grain during gun launch is applied by direct bearing through its aft end. It also follows that the circumferential surface of the propellant grain will expand to fill the cylinder, imposing a radial pressure varying with depth (hydrostatically) from the aft end to the forward end.

Therefore, during gun launch, the case cylinder usually experiences tension in the hoop direction due to internal pressure applied by the propellant. This internal pressure may well be several times larger than the operating pressure later in flight, when the propellant burns. Moreover, during gun launch, the axial force needed to accelerate the payload located forward of the rocket motor is carried around the propellant grain by axial compression in the rocket motor case, which should be proportioned so that buckling does not occur.

The buckling load for an axially compressed thin cylinder depends on its radius, thickness and length, and upon the modulus of elasticity at the actual imposed effective stress level. When the material "yields", the modulus decreases from the initial value, Young's modulus, to zero eventually (for ductile metals). Effectively, the material yields under the mixed tension and compression condition at a far lower stress level than if either stress were acting alone, and the modulus of elasticity -- and the buckling load -- are thereafter much reduced. Thus, the thickness needed to assure a suitable safety factor is expected to be much higher than would be deduced for either the internal pressure or axial force alone.

In recent years, efforts to overcome the above-described behaviors of both the propellant and the case cylinder have turned to admitting the gun pressure to the interior of the rocket motor case. Examples of this approach are disclosed in U.S. Patent No. 3,349,708, and are also explained in detail in U.S. Patent No. 6,094,906. Admitting the gun pressure to the interior of the rocket motor with the fluid void-filler has both obvious and subtle implications. Among the obvious is that unless the exterior surface of the rocket motor is also exposed to gun pressure, the case cylinder may have to accommodate as much as 60,000 psi (413.7 megapascal) internal pressure, or more -- an order of magnitude above the usual range of rocket motor operating pressures. To expose the external surface to pressure, an obturator, which is a sliding seal between the projectile and the gun tube that prevents the gun pressure from escaping around the projectile, is moved from the aft to the forward end of the rocket motor. It follows that, for the quasi-static situation at maximum acceleration, the differential pressure across the case cylinder wall is external pressure of varying magnitude, reflecting the hydrostatic gradient in the propellant grain. Further, the axial compression in the case cylinder disappears because the accelerating force for the payload is applied directly to the forward closure.

The subtle implications reflect the dynamic situations as the gun pressure rises rapidly upon ignition, and as the gun pressure disappears when the obturator passes out of the gun bore. At the outside, because the orifice into the rocket motor is quite small, the intensity of the gun pressure applied to its interior lags the pressure intensity applied to the exterior. This threatens to buckle the case if the duration of the lag is large enough. Also when the obturator clears the gun bore, the small nozzle orifice prevents an instantaneous drop of internal pressure after the external pressure disappears. This threatens to burst the case unless it has been made thick enough to withstand the gun pressure level -- acting alone -- that prevails immediately before the obturator clears the gun bore.

Given usual propellants and rocket motor nozzles, greater range or velocity is achieved for the projectile by configuring the rocket motor such that it can hold a maximum amount of propellant. However, the outside diameter, and hence the available volume for propellant, of gun-launched rocket motors is limited by the size of the gun bore from which the rocket motors are fired.

The volume of propellant in gun launched rocket motors is maximized when the interior diameter of the rocket motor case cylinder is maximized by making the case cylinder as thin as possible. However, the case cylinder should be designed thick enough to withstand gun launch loads, and, when gun pressure is allowed within the case cylinder, the pressure differentials between the inside and outside of the case cylinder. The case cylinder should further be designed to withstand pressure differentials not only at maximum levels, but as the gun pressure rises early during launch and falls as the rocket motor exits the gun bore. Rocket motors designed according to the prior art must therefore survive gun launch loadings that are frequently far more severe than the later loadings during rocket motor burn. This may require thicker structures which diminish the volume available for propellant, and which increase the inert weight of the motor, thereby diminishing the attainable range or velocity of the projectile.

Thus, an advancement over the prior art would be achieved by introducing rocket motor configuration features that diminish the net loads that the rocket motor case cylinder must be designed to withstand during gun launch, thereby diminishing the inert weight and increasing the available propellant volume while also providing an insensitive munitions system that is effective against slow cook-off conditions.

Such rocket motor configuration features are disclosed and claimed herein.

### OBJECTS OF THE INVENTION

It is one object of this invention to provide a rocket motor having an insensitive munitions system that is capable of passing a slow cook-off test.

It is another object of this invention to address the above-advancement by providing a gun-launched rocket motor designed to diminish the net loads that the rocket motor case experiences during gun launch, reduce the inert weight and increase the available propellant volume, and provide an insensitive munitions case and closure design.

It is still another object of the invention to provide a rocket motor design that accommodates size variations of the solid propellant as temperature conditions vary, such as while the rocket motor is being transported or stored, and incorporates in the insensitive munitions capability.

It is still another object of this invention to provide a projectile having a rocket motor that meets one or more of the above-mentioned objects.

Several embodiments of the invention are disclosed and claimed herein. In some instances, the embodiments accomplish one of these objects, whereas other the embodiments are intended to fulfil a plurality or all of these objects. Further, additional objects and advantages of the invention are set forth in the description that follows, and in part will be apparent from the description, or may be learned by practice of the invention. The objects and advantages of the invention may be realized and obtained by means of the instrumentalities and combinations pointed out in the appended claims.

### SUMMARY OF THE INVENTION

In accordance with the purposes of the invention as embodied and broadly described in this document, a rocket motor according to a first aspect of this invention has insensitive munitions capability. The rocket motor comprises a case including a cylindrical region, a closed forward end, and an aft assembly, the aft assembly comprising an aft closure member provided with an opening, the case being rupturable at an internal pressure burst level. The rocket motor further comprises a nozzle assembly coupled to the case, the nozzle assembly comprising a nozzle passageway. A primary propellant grain is contained in the case and has an auto-ignition temperature at which the primary propellant grain auto-ignites. The primary propellant grain is formulated to undergo thermal expansion in response to being heated to temperatures below the auto-ignition temperature so as to fill free volume, if any, inside the case and to apply an internal pressure to the case that is less than the internal pressure burst level. An igniter assembly is operational between an inactive state and an activate state. In the inactivate state, the nozzle passageway is obstructed to substantially prevent the flow of combustion gases through the central nozzle passageway. In the activate state, the igniter assembly ignites the primary propellant grain and the nozzle passageway is substantially unobstructed to permit flow through the central nozzle passageway for propelling the rocket motor. An insensitive munitions charge is located inside the case and has an insensitive munitions auto-ignition temperature at which the insensitive munitions charge auto-ignites to release gas. The insensitive munitions auto-ignition temperature is below the primary propellant auto-ignition temperature. The insensitive munitions charge is present in an effective amount that the gas released by auto-ignition of the insensitive munitions charge combines with the internal pressure applied by the thermal expansion of the primary propellant grain when the igniter assembly is in the inactive state to raise the internal pressure inside the case above the internal pressure burst level for rupturing the case before the primary propellant grain reaches the auto-ignition temperature thereof.

In accordance with the purposes of the invention as embodied and broadly described in this document, a rocket motor according to a second aspect of this invention comprises a rupturable case including a cylindrical region, a closed forward end, and an aft assembly. The aft assembly comprises an aft closure member provided with an opening. A nozzle assembly is coupled to the case and comprises a nozzle passageway and a throat-barrier member for obstructing the nozzle passageway. A primary propellant grain is contained in the case, has an auto-ignition temperature, and is formulated to undergo thermal expansion in response to being heated within a range of temperatures below the auto-ignition temperature. As the primary propellant grain thermally expands, it will substantially fill free volume, if any, inside the case and to apply an internal pressure to the case that is less than the internal pressure burst level at which the case will rupture. An igniter assembly is positioned in the nozzle assembly and is operational between an inactive state and an activated state. In the inactive state, the igniter assembly is situated in the nozzle passageway and the throat-barrier member obstructs the nozzle passageway for substantially preventing the flow of gases through the nozzle passageway. In the activated state, the igniter assembly ignites the primary propellant grain, causing the nozzle passageway to become substantially unobstructed by the throat-barrier member and permitting the flow of gases through the nozzle passageway. The rocket motor of this aspect of the invention further comprises an insensitive munitions charge located inside the case and having an insensitive munitions auto-ignition temperature at which the insensitive munitions charge auto-ignites to release gas. The insensitive munitions auto-ignition temperature is below that of the primary propellant auto-ignition temperature. The insensitive munitions charge is present in an effective amount that the gas released by auto-ignition of the insensitive munitions charge combines with the internal pressure applied by the thermal expansion of the primary propellant grain to raise the internal pressure inside the case above the internal pressure burst level. Because the igniter assembly is in the inactive state and the nozzle passageway is obstructed during insensitive munitions operation, the internal pressure cannot escape through the nozzle passageway and the internal pressure builds to rupture the case. Further, because the insensitive munitions auto-ignition temperature is below that of the primary propellant grain, rupturing of the case occurs before the primary propellant grain reaches its auto-ignition temperature. Thus, if the primary propellant is eventually ignited or auto-ignited, gases thereby generated will be able to escape the case through the ruptured portion of the case without producing significant propulsive forces.

In particularly preferred embodiments, the first and second aspects of the invention are capable of achieving the object of providing a rocket motor having an insensitive munitions system that is capable of passing a slow cook-off test. Because there is no or substantially no free volume inside of the rocket motor and much of the pressure is produced by the expanding propellant grain, the insensitive munitions charge may be small and the quantity of gas it produces may be relatively small. Therefore, the case rupture resembles a hydroburst, not a gas burst.

In accordance with the purposes of the invention as embodied and broadly described in this document, a rocket motor according to a third aspect of this invention comprises a case that is rupturable at an internal pressure burst level and includes a cylindrical region, a closed forward end, and an aft assembly. The aft assembly comprises an aft closure member provided with a central opening. A sliding piston is slidably retained within the aft assembly and the cylindrical region of the case so as to be movable from an at-rest position forward to a maximum pressure position in which the primary propellant grain is axially compressed to radially expand the primary propellant grain toward the cylindrical region of the case in response to firing of the rocket motor. The sliding piston is also slidable aftward in response to expansion of the primary propellant grain caused by elevated external temperatures. A nozzle assembly is slidably mounted within a central bore of the sliding piston to slide in tandem with the sliding piston. The nozzle assembly comprises a central nozzle passageway and a throat-barrier member for obstructing the central nozzle passageway. A primary propellant grain is contained in the case and has an auto-ignition temperature at which the primary propellant grain auto-ignites. The primary propellant grain is formulated to undergo thermal expansion in response to external heat sources below the auto-ignition temperature. As the primary propellant grain thermally expands, it substantially fills free volume, if any, inside the case and applies an internal pressure to the case that is less than the internal pressure burst level. An igniter assembly is positioned within the nozzle assembly and operational between an inactive state and an activated state. In the inactive state, the igniter assembly is situated in the central nozzle passageway and the throat-barrier member obstructs the central nozzle passageway for substantially preventing flow through the central nozzle passageway. On the other hand, in the activated state the igniter assembly ignites the primary propellant grain and the central nozzle passageway is substantially unobstructed by the throat-barrier member to permit flow through the central nozzle passageway. An insensitive munitions charge is located inside the case and has an insensitive munitions auto-ignition temperature at which the insensitive munitions charge auto-ignites to release gas, the insensitive munitions auto-ignition temperature being below the primary propellant auto-ignition temperature. The insensitive munitions charge is present in an effective amount that the gas released by auto-ignition of the insensitive munitions charge produces additional internal pressure inside the case. The internal pressure applied by the insensitive munitions charge combines with the internal pressure applied by the thermal expansion of the primary propellant grain to raise the total internal pressure inside the case above the internal pressure burst level. Because the igniter assembly is in the inactive state and the flow of gases through the central nozzle passageway is substantially prevented, the total internal pressure generated by the combination of the thermal expansion of the primary propellant and gases released by the insensitive munitions charge reaches the internal pressure burst level and causes the case to rupture. Case rupture occurs before the primary propellant grain reaches the auto-ignition temperature thereof. As a consequence, if the primary propellant grain eventually reaches its auto-ignition temperature or is otherwise ignited, gases produced by the primary propellant grain will be able to escape the case through the rupture in a relatively safe manner.

In accordance with this third aspect of the invention, the interior environment controlled movable piston accommodates volume changes due to propellant thermal expansion and accommodates the substantial gun pressures associated with gun launched projectiles. This enables a rocket motor structure design with the ability to withstand a dramatic rapid rise and dramatic sudden fall in pressure associated with gun launched rockets. The movable piston also permits the rocket motor to be constructed from thinner and lighter materials to increase the available propellant volume and reduce overall inert weight. As a consequence, the range and effectiveness of the rocket motor are increased. Simultaneously, the rocket motor incorporates IM capability to permit the rocket motor to be rendered relatively harmless should the solid propellant inappropriately ignite while being stored or transported.

In accordance with a fourth aspect of this invention, the rocket motor comprises a primary insensitive munitions charge and a secondary insensitive munitions charge. The secondary insensitive munitions charge is formulated to have an auto-ignition temperature below the auto-ignition temperature of the propellant grain yet higher than the auto-ignition temperature of the primary insensitive munitions. The secondary insensitive munitions charge is preferably located in close proximity to the end burn surface of the primary propellant grain, so that auto-ignition of the secondary insensitive munitions charge in turn ignites the end burn surface of the primary propellant grain. As a consequence, the primary propellant grain will begin to burn from its end surface (where intended) before the primary propellant grain reaches its auto-ignition temperature. Thus, a significant portion or all of the primary propellant grain will be consumed by controlled burning at its end surface prior to auto-ignition of the primary propellant grain. Also, because the secondary insensitive munitions charge is designed to auto-ignite after the primary insensitive munitions charge, the case should already have burst (i.e., vented) by the time the secondary insensitive munitions charge auto-ignites.

### BRIEF DESCRIPTION OF THE DRAWINGS

The accompanying drawings are incorporated in and constitute a part of the specification. The drawings, together with the general description given above and the detailed description of the preferred embodiments and methods given below, serve to explain the principles of the invention. In such drawings:
FIG. 1 illustrates a projectile incorporating a rocket motor according to a presently preferred but merely illustrative embodiment of the present invention, the rocket motor being shown in cross-sectional view;
FIG. 2 is a cross-sectional view of an embodiment of the rocket motor of the present invention, depicting the rocket motor in an at-rest condition;
FIG. 3 is an enlarged cross-section view of the aft closure assembly, sliding piston, nozzle assembly, and igniter assembly of the rocket motor of FIG. 2, depicting the rocket motor in an at-rest condition;
FIG. 4 is an enlarged cross-sectional view of a portion of FIG. 3;
FIG. 5 is a cross-sectional view of the rocket motor of FIG. 2, depicting the rocket motor in an activated state during normal burn;
FIG. 6 is a cross-sectional view of the rocket motor of FIG. 2, depicting an insensitive munitions condition of the rocket motor during propellant expansion caused by elevated external temperatures; and
FIG. 7 is an enlarged cross-section view of the aft closure assembly, sliding piston, nozzle assembly, and igniter assembly of a rocket motor in an at-rest condition in accordance with another embodiment of the invention.

### DETAILED DESCRIPTION OF PREFERRED EMBODIMENTS AND PREFERRED METHODS OF THE INVENTION

Reference will now be made in detail to the presently preferred embodiments and methods of the invention as described below. It should be noted, however, that the invention in its broader aspects is not limited to the specific details, representative devices and methods, and examples described in this section in connection with the preferred embodiments and methods. The invention according to its various aspects is particularly pointed out and distinctly claimed in the attached claims read in view of this specification, and appropriate equivalents.

It is to be noted that, as used in the specification and the appended claims, the singular forms "a," "an," and "the" include plural referents unless the context clearly dictates otherwise.

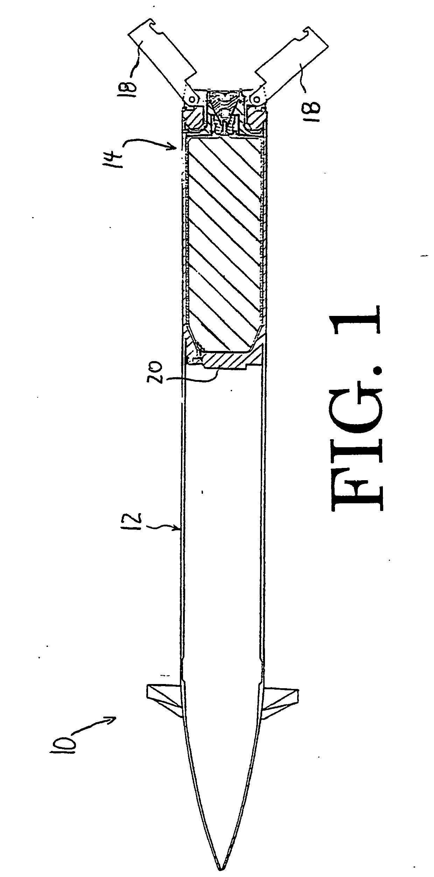

FIG. 1 shows a projectile, generally designated by reference numeral 10, that includes a forward end structure 12 that can contain some payload, such as, for example, a guidance system and/or an explosive charge. The forward end structure 12 is coupled to an aft rocket motor, generally designated by reference numeral 14. Included at the aft end are fins 18 shown as being pivotally attached to the rearmost portion of the rocket motor 14. The projectile 10 is designed to be launchable by a gun or other similar weapon.

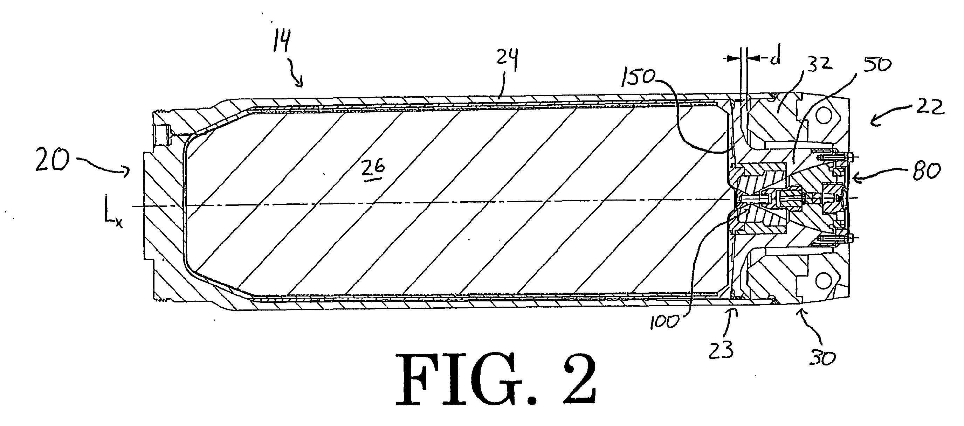

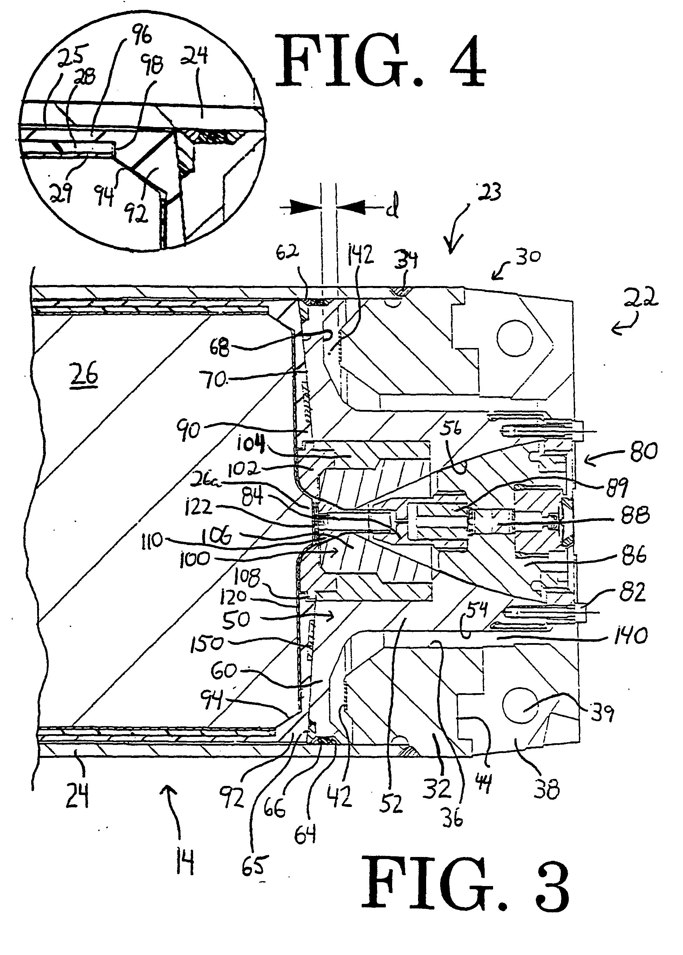

FIGS. 2 and 3 show the rocket motor 14 in an at-rest position and, in particular, an enlarged view of a portion of the aft end is shown in FIG. 3. The rocket motor 14 is generally symmetrical about longitudinal axis Lx. The rocket motor 14 includes a forward end closure 20, and aft end generally designated by reference numeral 22, and an outer case 23 having a cylindrical portion 24 that contains a propellant or propellant grain 26. The case 24 is preferably made of a metal such as steel, although other materials such as a composite material (e.g., wound pre-impregnated fibers) may be used. The propellant grain 26 preferably has a primary propellant auto-ignition temperature of about 460°F (about 238°C). Suitable propellant grains 26 comprise composite propellants containing ammonium perchlorate oxidizer, aluminum fuel, and hydroxyl terminated polybutadiene binder, as well as additional optional materials such as titanium dioxide ballistic modifiers. Double-base propellants may also be used as the propellant grain 26. These examples are intended to be representative, not exhaustive, of the scope of application of this invention.

As shown in FIG. 3, an aft closure assembly, generally indicated by reference numeral 30, includes an aft closure member 32 mounted within and welded at 34 to the aft end of the cylindrical portion 24 of the case 23. The aft closure member 32 is provided with an internal cylindrical bore 36, and has a forward surface 42 and an aft surface 44. The forward surface 42 may optionally include a rubber seal. The flight control fins are rotatably mounted to fin lugs 38 by pin 39. In this manner, the fins mounted in the fin lugs 38 can deploy by swinging outwardly and the fin lugs 38 can spin, as is both necessary and appropriate, once the rocket leaves the bore of the launch weapon.

Located inboard of the aft closure member 32 is a sliding piston 50. The sliding piston 50 includes a main cylindrical body 52 having an external or outer surface 54, an internal chamber (unnumbered), and a sloping interior rear surface 56. An igniter assembly 80 may be fixed to the interior rear surface 56 by, for example, conventional techniques. For example, in the illustrated embodiment frangible bolts 82 connect the igniter assembly 80 to the sliding piston 50. The bond between the igniter assembly 80 and the sloping interior rear surface 56 of the sliding piston 50 is provided by a conventional soft and frangible adhesive, thereby making this bond one that can break and yield.

Included as part of the igniter assembly 80 are a forward nozzle 84 and a main body 86, which contains a conventional igniter charge 89 in operative communication with a conventional time delay ignition train 88 positioned aft of the nozzle 84. Operation of the igniter assembly 80 during normal launch of the rocket motor, as well as the part that the igniter assembly plays in the IM system of this embodiment, will be described in further detail below.

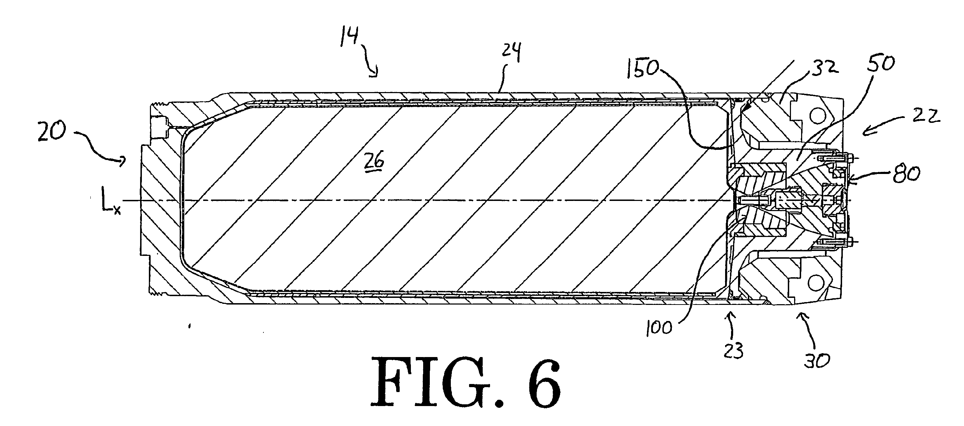

The sliding piston 50 includes an annular flange 60 that extends radially outwardly from the main cylindrical body 52 to slidingly engage the inner surface of the cylindrical portion 24 of the case 23. Three seal components including outboard aluminum rings 62 and 64 and a centrally positioned rubber O-ring 66 are used at the interface of the flange 60 and the cylindrical portion 24 of the case 23. The aluminum rings 62 and 64 are provided to maintain the integrity of the O-ring 66 and to keep the O-ring 66 from extruding during movement of the sliding piston 50. These seal components are also situated at the outer periphery of the flange 60 to provide sliding contact between the outer periphery of the flange 60 and the internal surface of the cylindrical portion 24 of the case 23. Pressure imparted by the gun gases cause the piston 50 to move forward, thus moving the flange 60 relative to the cylindrical portion 24 of the case 23. These seal components also serve similar functions as the piston moves aftward during IM activation, that is, from a position shown in FIG. 2 to that shown in FIG. 6. A retaining ring 65 is positioned forward of the seal components, and serves to retain the seal components between the outer periphery of the flange 60 and the internal surface of the cylindrical portion 24 of the case 23. The retaining ring 65 may be made of, for example, steel.

The radially extending flange 60 has a rear or aft surface 68 and a forward surface 70. The aft surface 68 of the flange 60 is spaced from the forward surface 42 of the aft closure member 32 by a cavity 142. This cavity 142 has a depth d and, as explained in further detail below, the depth d will vary over the course of rocket motor firing and insensitive munitions activity.

A tapered rubber insulator 90 is mounted to the forward surface 70 of the flange 60. Optionally, a hard plastic insulator (not shown) may be mounted between the forward surface 70 and the tapered rubber insulator 90. The tapered rubber insulator 90 is characterized by a tapered cross section that has its largest dimension adjacent to a nozzle assembly, which is generally designated by reference numeral 100. The tapered rubber insulator 90 tapers down to its smallest dimension at a point where the insulator 90 is formed with a triangular shaped corner portion 92, which has an interior angle surface 94. The tapered rubber insulator 90 may be made, for example, of an EPDM rubber composition.

The nozzle assembly 100 comprises an annular forward nozzle insulator 102 and an annular aft nozzle insulator 104. The forward and aft nozzle insulators 102 and 104 are adhesively bonded to each other and an annular throat insert 106, which is centrally and concentrically located relative to the insulators 102 and 104. The forward and aft nozzle insulators 102 and 104 are provided with a tongue and groove interlocking structure, as generally shown at 108. The throat insert 106 may be made of a refractory metal, such as tungsten, rhenium, or alloys thereof. The throat insert 106 has an area of minimum cross sectional dimension, known as the nozzle throat.

The front end of the igniter assembly 80 protrudes towards the nozzle throat. Located forward of the igniter assembly 80 is a throat-barrier member 110, which in the illustrated embodiment is an eroding (e.g., steel) nozzle piece. It is to be understood, however, that the nozzle throat-barrier member 110 may undertake other forms consistent with the objects of this invention, and may even constitute part of the igniter assembly 80.

As shown in FIG. 4, the cylindrical portion 24 of the case 23 serves as the outer container of the rocket motor 14. Inboard of the interior of the cylindrical portion 24, and forward of the aluminum ring 62, is an annular void space 25. Inboard of the void space 25 is an annular extension 96 of the tapered rubber insulator 90. The extension 96 extends from the triangular shaped corner portion 92 to the forward end closure 20. A shoulder 98 is formed at the interior side of the triangular-shaped corner portion 92. Mounted on the shoulder 98 and inboard of the extension 96 is a cylindrical rubber-type insulator 28 with a polymer or similar type liner 29. The liner 29 covers and extends around the outer surface of the propellant grain 26 forward of the angled surface 94 and bonds the propellant grain 26 to the insulator 28. If desirable, adhesive may be placed on the interior surface of the liner 29 for strengthening this bond.

It should be understood that the exact materials used to surround and insulate the propellant grain 26, and their arrangement and dimensions may vary depending upon the type of propellant used. These elements will be known to those skilled in the art.

A rubber sheet nozzle insulator 120 extends from an outer periphery adjacent the angled surface 94, which lies unbonded adjacent the propellant 26. The rubber sheet nozzle insulator 120 has a forward surface that contacts and extends across the aft end of the propellant grain 26, including a central nipple 26a of the propellant grain 26 that protrudes towards the nozzle throat. The aft surface of the rubber sheet nozzle insulator 120 is suitably bonded to and extends along the forward surface of the tapered rubber insulator 90 and the forward face of the forward nozzle insulator 102. An inhibitor portion 122 passes across the nozzle passageway forward of the throat-barrier member 110. The inhibitor portion 122 may be formed, for example, from liquid rubber that is poured in place and cures at room temperature. Techniques for bond-surface preparation and the selection of suitable adhesive formulations, compatible with the propellant and insulator materials, are well known to those skilled in the art.

Interposed between the nipple 26a and the rubber sheet nozzle insulator 120 is a forward aluminum plate (not shown). In operation, the aluminum plate prevents the pressurized propellant grain 26 from extruding through the throat-barrier member 110.

An insensitive munitions charge 150 is illustrated positioned in an annular recess of and contacting the tapered rubber insulator 90, with an aft surface of the insensitive munitions charge 150 positioned flush against the forward surface 70 of the flange 60. Although shown having an annular shape, the insensitive munitions charge 150 may have other shapes and be located at other positions. For example, the insensitive munitions charge 150 may comprises a plurality of distinct charges circumferentially spaced apart from each other. Other suitable locations for the insensitive munitions charge 150 include, for example, adjacent to the extension 96. The insensitive munitions charge 150 is preferably an energetic material. Representative insensitive muntions charges 150 include, by way of example, rocket propellants, such as dihydroxyglyoxime propellants, hydroxy-terminated polyethers, and TPGE (a random 50:50 copolymer of polytetrahydrofuran and polyethyleneglycol, available from Alliant Techsystems Inc.) propellants. These examples are meant to be an illustrative list, and not exhaustive of the scope of the invention. Preferably, the insensitive munitions charge 150 has an insensitive munitions auto-ignition temperature that is at least 100°F (56°C) below the auto-ignition temperature of the primary propellant grain 26.

With reference to FIG. 3, it can be noted that an annular gap 140 is defined between the exterior surface 54 of the sliding piston 50 and the interior bore 36 of the aft closure member 32. During normal operation, the rocket motor 14 will be launched, preferably from a launch weapon, as discussed previously. As a result of such a gun launch, and as gun gases are generated within the bore of the gun, by the gun propellant (not shown) aft of the rocket motor 14, such gun gases will enter annular gap 140 and strike against and pressurize the aft surface 68 of the flange 60. The imposing of such axial forces on the sliding piston 50 moves the sliding piston 50 from an at-rest position forward toward and ultimately to a maximum pressure position. As the sliding piston 50 is moved forward, the depth d of the cavity 142 between the aft surface 68 of the flange 60 and the forward surface 42 of the aft closure member 32 is increased. As the sliding piston 50 moves forward to increase the size of the cavity 142, the outer edge of the flange 60 slides along the inside surface of the cylindrical portion 24, guided by seal components 62, 64, and 66. The axial force on the flange 60 of the sliding piston 50 is transmitted through the tapered rubber insulator 90, compressively loading the propellant 26 and causing the propellant 26 to deform radially to fill the void space 25. Similar type movement of a sliding piston is disclosed and illustrated in U.S. Patent No. 6,094,906 to Singer et al.

As the gun launch concludes, gun gases that entered the motor 14 through the annular gap 140 will depart through that same annular gap 140 and forces acting on the aft surface 68 of the flange 60 (through cavity 142) will progressively lessen. Compressive forces previously acting on the propellant 26 will likewise progressively decrease and as these forces decrease, pressures interior and exterior to the case 24 will also progressively decrease. As a consequence, the case 24 will have been able to tolerate the rise and fall of interior and exterior pressures associated with gun launching.

As forces decrease, the axial force acting to compress the tapered rubber insulator 90 also lessens, allowing the insulator 90 to return to its uncompressed condition. As the tapered rubber insulator 90 returns to its former thickness, such movement will initiate aftward movement of the sliding piston 50 toward the aft closure member 32 and separate the bond provided between the propellant 26 and the forward surface of the rubber sheet nozzle insulator 120. This separation provides a path for burn propagation during normal ignition that will follow. The aft surface of the rubber sheet nozzle insulator 120 remains adhered to most of the forward face of the forward nozzle insulator 102. At this point, the propellant 26 is ready to be ignited for a normal burn.

The gun gases initiate burn of the time delay ignition train 88 within the igniter assembly 80, so that at a desired interval after the projectile leaves the bore of the launch weapon an igniting flame passes from the igniter assembly 80 through inhibitor 122 and into contact with the propellant 26. When this occurs, the rubber sheet nozzle insulator 120 will be adhered to the forward surface of the forward nozzle insulator 102. With this connection, normal burning of the propellant 26 can proceed on the forward side of the rubber sheet nozzle insulator 120.

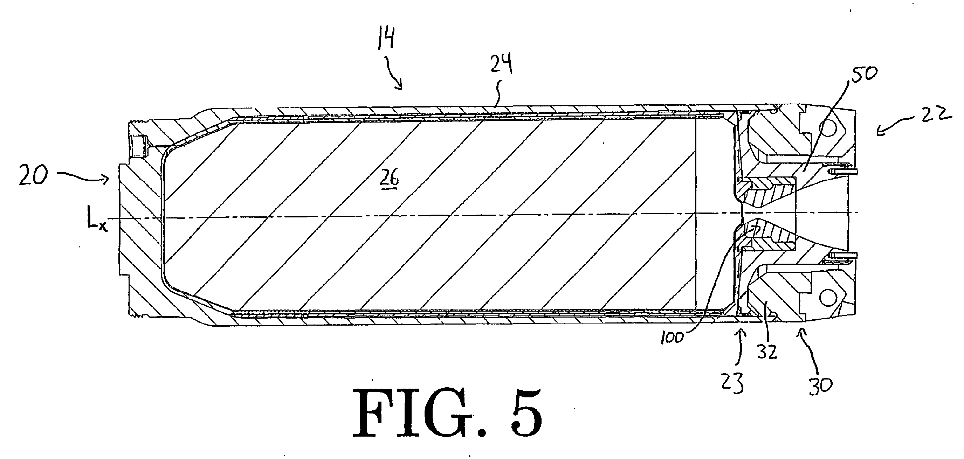

As the propellant 26 is ignited by the igniter assembly 80, the throat-barrier member 110 is eroded or otherwise substantially removed or jettisoned by activation of the igniter assembly 80 and/or burning of the propellant 26. Burning of the propellant 26 causes the sliding piston 50, together with the attached nozzle assembly 100, to slide aftward until the aft surface 68 of the flange 60 contacts the forward surface 42 of the aft closure member 32, as shown in FIG. 5. As propelling forces begin to rise, heat and pressure build within the nozzle assembly 100. Due to the frangible nature of the bond holding the igniter assembly 80 in place, such pressures will also break that bond, thereby expelling the igniter assembly 80 from the nozzle passageway. FIG. 5 illustrates the rocket motor 14 after the igniter assembly 80 has been ejected.

Although not shown, an obturator may be used at the forward end of the rocket motor 14. In conjunction with the internal compression chamber, the obturator provides a way to minimize the differences between internal and external pressures which vary rapidly as the rocket progresses down the gun bore. Moreover, nearly the full gun pressure applied to the inner surface of the forward closure provides the accelerating force for the payload farther forward. The axial force in the case cylinder is reduced to merely the low level required to accelerate the rear closure and other features farther aft, acting in axial tension. The present invention may be constructed and designed so that the material used for the structure, preferably an 18 Ni 300 Maraging Steel, will have sufficient capacities, for thicknesses of the parts used, to resist all imposed loadings with ample safety margins, thereby providing effective structure for the rocket motor.

The structural features described above also allow this rocket motor design to satisfy certain insensitive munitions (IM) requirements that help assure safe storage. How this system operates will now be described and the foregoing IM protection will become clear. In an abnormal burn or ignition situation, such as could occur due to external case heating, it is proposed that the primary propellant grain 26 begins to heat and thermally expand. In a particularly preferred aspect of the invention, the propellant thermal expansion temperature range is selected to fill the free volume of the case 24, including the void 25, with the primary propellant grain 26 at about 150°F (66°C). As the primary propellant grain 26 continues to undergo thermal expansion, it applies an internal pressure to the case 24 because the propellant grain 26 cannot extrude through the nozzle. Simultaneously, the piston 50 slides aftward until the rear surface of the flange portion 60 abuts against the front surface 42 of the aft closure member 32. In this manner, the cavity 142 will progressively lessen in size until reaching the state shown in FIG. 6. In FIG. 6, the arrow represents the location at which the cavity 142 had been located.

As external heating of the rocket motor 14 continues, thermal expansion of the propellant grain 26 continues to increase and apply internal pressure to the case 24. Eventually, if the insensitive munitions charge 150 reaches its auto-ignition temperature, which is preferably no more than about 360°F (about 181°C), the insensitive munitions charge 150 auto-ignites to release gas into the internal chamber of the rocket motor 14. In a particularly preferred embodiment, the internal pressure released by auto-ignition of the insensitive munitions charge 150 is not more than 25 percent of the internal pressure applied by the thermal expansion of the primary propellant grain 26. The internal pressure exerted by both the thermal expansion of the primary propellant grain 26 and the gas generation of the insensitive munitions charge 150 is designed to be greater than the internal pressure burst level of the case 24. The throat-barrier member 110 prevents the escape of this pressure through the nozzle passageway. As a result, the case 24 will burst. Because the auto-ignition temperature of the insensitive munitions charge 150 is less than, preferably at least 100°F (56°C) less than, the auto-ignition temperature of the propellant grain 26, the insensitive muntions charge 150 will auto-ignite to release gas and the case 24 will burst before the primary propellant grain 26 auto-ignites. As a result, the burst is achieved mostly by the pressure generated by the thermal expansion of the propellant grain 26, causing the burst to resemble a hydroburst, not a gas burst. Hence, the case 24 fails, while preferably not producing propulsive fragments. In the event that the primary propellant grain 26 eventually does auto-ignite or is ignited, gases generated by the primary propellant grain 26 may be discharged through the burst case without generating significant or any propulsive forces.

As referred to herein, bursting of the case 24 means sufficient structural failure to open a vent gas (other than the central nozzle passageway) through which accumulated gas may be vented to the atmosphere safely without creating significant propulsive force. Bursting of the case 24 may include, for example, structural failure of the cylindrical portion 23, such as the formation of cracks in the cylindrical portion 23 of the case, or structural failure of the end closure assembly or sliding piston. Additionally or in the alternative, bursting of the case may include, for example, failure of case joints, such as failure of the weld 34 coupling the cylindrical portion 23 to the aft closure member 32. Failure of weld 34 will likely cause the aft closure member 32, the sliding piston 50, the nozzle assembly 100, and the igniter assembly 80 to eject as a unit. Thereafter, the exhaust area available for expulsion of gases will be sufficiently large that the propulsive force will be quite small.

Thus, the IM requirement of having a safety release capability built into the rocket motor is achieved. The aft side venting assures that gases resulting from an abnormal propellant burn will not pass through the nozzle throat.

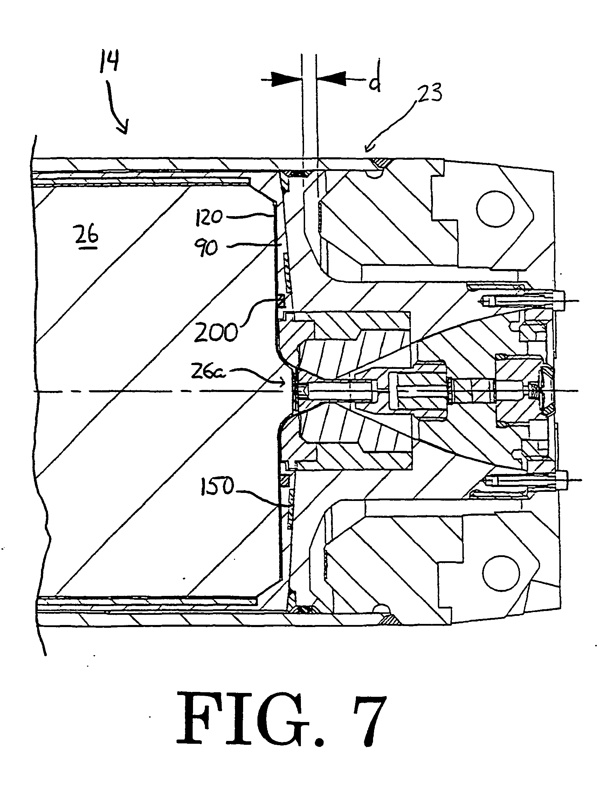

Another embodiment of this invention will now be discussed with reference to FIG. 7. In this embodiment, the insensitive munitions charge 150 is a primary insensitive munitions charge, and the rocket motor 14 further comprises a secondary insensitive munitions charge 200. The secondary insensitive munitions charge 200 has an auto-ignition temperature below the auto-ignition temperature of the primary propellant grain 26 yet higher than the auto-ignition temperature of the primary insensitive munitions charge 150.

It is presently preferred in this embodiment for the secondary insensitive munitions charge 200 to be positioned in close proximity to the end burn surface of the primary propellant grain 26, and more preferably in close proximity or contact with the nipple 26a of the primary propellant grain. As shown in FIG. 7, the secondary insensitive munitions charge 200 may be placed in a recess at the front surface of the tapered rubber insulator 90. As with the case of the primary insensitive munitions charge 150, the secondary insensitive munitions charge 200 can be annular or may comprise a discrete piece or a plurality of discrete pieces spaced (e.g., circumferentially) from each other.

The use of the second insensitive munitions charge 200 is especially advantageous for rocket motors 14 having primary propellant grain 26 that undergo severe combustion reactions. Because the secondary insensitive munitions charge 200 has a higher auto-ignition temperature than the primary insensitive munitions charge 150, the secondary insensitive munitions charge 200 will not undergo auto-ignition until subsequent to auto-ignition of the primary insensitive munitions charge 150 and, hence, bursting of the case 23. By the time the secondary insensitive munitions charge 200 auto-ignites, the case 23 will already have been vented. Preferably, the auto-ignition temperature of the secondary insensitive munitions charge 200 is about 50°F (about 28°C) higher than that of the primary insensitive munitions charge 150.

Further, because the secondary insensitive munitions charge 200 has a lower auto-ignition temperature than the primary propellant grain 26, the propellant grain 26 will be ignited at its aft surface before the total propellant grain 26 can undergo auto-ignition. As a consequence, ignition of the primary propellant grain 26 is largely isolated to a single position (or a plurality of positions) at which the secondary insensitive munitions charge 200 is located. Furthermore, the close proximity of the secondary insensitive munitions 200 to the aft surface of the primary propellant grain 26 causes the primary propellant grain 26 to be ignited at its aft surface, where intended. The ignition of the primary propellant gain 26 at its aft surface leads to a relative non-violent reaction at essentially ambient pressure and produces very low propulsive thrust and lower likelihood of propulsive fragments. Preferably, the auto-ignition temperature of the secondary insensitive munitions charge 200 is about 350°F (about 177°C). It is believed that those having ordinary skill in the art and reference to this disclosure can identify suitable secondary insensitive munitions charges 200 without undue experimentation.

The foregoing detailed description of the preferred embodiments of the invention has been provided for the purposes of illustration and description, and is not intended to be exhaustive or to limit the invention to the precise embodiments disclosed. The embodiments were chosen and described in order to best explain the principles of the invention and its practical application, thereby enabling others skilled in the art to understand the invention for various embodiments and with various modifications as are suited to the particular use contemplated. It is intended that the scope of the invention cover various modifications and equivalents included within the appended claims.

## Claims

1. A rocket motor (14) having insensitive munitions capability, the rocket motor (14) comprising a case (23) including a cylindrical region (24), a closed forward end (20), and an aft assembly (22), the aft assembly (22) comprising an aft closure member (32) provided with an opening, the case (23) being rupturable at an internal pressure burst level, a nozzle assembly (100) coupled to the case (23), the nozzle assembly (100) comprising a nozzle passageway, **characterized by**:
a primary propellant grain (26) contained in the case (23) and having an auto-ignition temperature at which the primary propellant grain (26) auto-ignites, the primary propellant grain (26) formulated to undergo thermal expansion in response to being heated to temperatures below the auto-ignition temperature so as to fill free volume, if any, inside the case (23) and to apply an internal pressure to the case (23) that is less than the internal pressure burst level;
an igniter assembly (80) operational between an inactive state, in which the nozzle passageway is obstructed, and an activated state, in which the igniter assembly (80) ignites the primary propellant grain (26) and the nozzle passageway is substantially unobstructed to permit flow through the nozzle passageway; and
an insensitive munitions charge (150) located inside the case (23) and having an insensitive munitions auto-ignition temperature at which the insensitive munitions charge (150) auto-ignites to release gas, the insensitive munitions auto-ignition temperature being below the primary propellant auto-ignition temperature, the insensitive munitions charge (150) being present in an effective amount such that the gas released by auto-ignition of the insensitive munitions charge (150) combines with the internal pressure applied by the thermal expansion of the primary propellant grain (26) when the igniter assembly (80) is in the inactive state to raise the internal pressure inside the case (23) above the internal pressure burst level for rupturing the case (23) before the primary propellant grain (26) reaches the auto- ignition temperature thereof.

2. The rocket motor (14) of claim 1, wherein:
the nozzle assembly (100) comprises a throat barrier member (110) for obstructing the nozzle passageway when the igniter assembly (80) is in the inactive position;
in the inactive state, the igniter assembly (80) is positioned within the nozzle assembly (100) and the throat barrier member (110) obstructs the nozzle passageway; and
in the active state, the nozzle passageway is substantially unobstructed by the throat barrier member (110) to permit flow through the nozzle passageway.

3. The rocket motor (14) of claim 2, further comprising a sliding piston (50) slidably retained within the aft assembly (22) and the cylindrical region (24) of the case (23) so as to be movable from an at-rest position (a) forward to a maximum pressure position in which the primary propellant grain (26) is axially compressed to radially expand the primary propellant grain (26) toward the cylindrical region (24) of the case (23) in response to firing of the rocket motor (14), and (b) afterward in response to expansion of the primary propellant grain (26) caused by elevated external temperatures, wherein:
the opening of the aft closure member (32) is a central opening, and
the nozzle assembly (100) is slidably mounted within a central bore of the sliding piston (50), nozzle passageway of the nozzle assembly (100) being
a central nozzle passageway.

4. The rocket motor (14) of any one of claims 1-3, further comprising a rubber insulator (90) comprising a radial extending portion and an axial extension, the radial extending portion of the rubber insulator (90) being situated between the primary propellant grain (26) and the aft closure member (32), the axial extension being situated between the primary propellant grain (26) and the cylindrical region (24) of the case (23).

5. The rocket motor (14) of claim 4, wherein the axial extension of the rubber insulator (90) is spaced radially from the cylindrical region (24) of the case (23) to form a cylindrical void area therebetween.

6. The rocket motor of any one of claims 1-3, wherein the primary propellant grain thermal expansion temperature range is selected to fill the free volume of the case (23) with the primary propellant grain (26) at about 66°C.

7. The rocket motor (14) of any one of claims 1-3, wherein the primary propellant grain auto-ignition temperature is about 238°C.

8. The rocket motor (14) of any one of claims 1-3, wherein the throat- barrier member (110) comprises an erosive nozzle piece.

9. The rocket motor (14) of any one of claims 1-3, wherein the insensitive munitions charge (150) auto-ignition temperature is at least about 56°C below the auto- ignition temperature of the primary propellant grain (26).

10. The rocket motor (14) of any one of claims 1-3, wherein the internal pressure released by auto-ignition of the insensitive munitions charge (150) is not more than 25 percent of the internal pressure applied by the thermal expansion of the primary propellant grain (26).

11. The rocket motor (14) of any one of claims 1-3, wherein the insensitive munitions charge (150) is situated between the aft closure member (32) and the primary propellant grain (26).

12. The rocket motor (14) of any one of claims 1-3, further comprising a rubber insulator (90) comprising a radially extending portion situated between the primary propellant grain (26) and the aft closure member (32), wherein the insensitive munitions charge (150) is situated in contact with the radial extending portion of the rubber insulator (90).

13. The rocket motor (14) of any one of claims 1-3, further comprising a secondary insensitive munitions charge (200) positioned in close proximity to an aft surface of the primary propellant grain (26), the second insensitive munitions charge (200) having an auto-ignition temperature at which the second insensitive munitions charge (200) auto-ignites to release gas, the auto-ignition temperature of the second insensitive munitions charge (200) being below the primary propellant auto-ignition temperature yet higher than the insensitive munitions auto-ignition temperature.

14. The rocket motor (14) of claim 3, further comprising a rubber insulator (90) comprising a radially extending portion situated between the primary propellant grain (26) and the aft closure member (32), wherein:
the insensitive munitions charge (150) is situated in contact with the radial extending portion of the rubber insulator (90); and
the sliding piston (50) comprises a radially extending flange (60) having a front surface on which the radially extending portion of the rubber insulator (90) is situated.

15. The rocket motor (14) of claim 14, wherein the radially extending flange (60) of the sliding piston (50) has a rear surface (68) and the sliding piston (50) is spaced inwardly from the central opening to define an annular chamber open between the rear surface (68) and the atmosphere.

16. A projectile (10) launchable by a gun or other similar weapon, the projectile comprising:
the rocket motor (14) of any one of claims 1-15; and
a forward end structure (12) containing a payload and coupled to the rocket motor (14).

## Patentansprüche

1. Raketenmotor (14) mit einer unempfindlichen Munitionseigenschaft, wobei der Raketenmotor (14) ein Gehäuse (23) umfasst, einschließlich eines zylindrischen Bereichs (24), eines geschlossenen vorderen Endes (20) und einer Heckanordnung (22), wobei die Heckanordnung (22) ein Heckverschlussbauteil (32) umfasst, welches mit einer Öffnung versehen ist, wobei das Gehäuse (23) bei einem internen Berstdrucklevel brechen kann, und eine Düsenanordnung (100) an das Gehäuse (23) gekoppelt ist, wobei die Düsenanordnung (100) einen Düsendurchgang umfasst,
**gekennzeichnet durch**:
einen ersten Treibstoffeinsatz (26), der in dem Gehäuse (23) beinhaltet ist und eine Selbstentzündungstemperatur aufweist, bei welcher der erste Treibstoffeinsatz (26) automatisch zündet, wobei der erste Treibstoffeinsatz (26) formuliert ist, um eine thermische Expansion zu erfahren als Reaktion auf ein Erhitzen auf Temperaturen unterhalb der Selbstentzündungstemperatur, um innerhalb des Gehäuses (23) freies Volumen aufzufüllen, falls vorhanden, und um einen internen Druck auf das Gehäuse (23) aufzubringen, der geringer ist als der interne Berstdrucklevel;
eine Zündungsanordnung (80), die betreibbar ist zwischen einem inaktiven Zustand, in welchem der Düsenzugang versperrt ist, und einem aktivierten Zustand, in welchem die Zündanordnung (80) den ersten Treibstoffeinsatz (26) zündet und der Düsendurchgang im wesentlichen nicht versperrt ist, um einen Fluss **durch** den Düsendurchgang zu ermöglichen; und
eine unempfindliche Munitionsladung (150), die sich innerhalb des Gehäuses (23) befindet und eine unempfindliche Munitionsselbstentzündungstemperatur aufweist, bei welcher die unempfindliche Munitionsladung (150) sich selbst entzündet, um Gas freizusetzen, wobei die unempfindliche Munitionsselbstentzündungstemperatur unterhalb der ersten Treibstoffeinsatzselbstentzündungstemperatur liegt, wobei die unempfindliche Munitionsladung (150) in einer effektiven Menge vorhanden ist, so dass das Gas, welches **durch** die Selbstentzündung der unempfindlichen Munitionsladung (150) freigesetzt wurde, kombiniert mit dem internen Druck, der **durch** die thermische Expansion des ersten Treibstoffeinsatzes (26) aufgebracht wird, wenn die Zündanordnung (80) in dem inaktiven Zustand ist, um den internen Druck innerhalb des Gehäuses (23) über den internen Berstdrucklevel zum Zerbrechen des Gehäuses (23) anzuheben, bevor der erste Treibstoffeinsatz (26) die Selbstentzündungstemperatur davon erreicht.

2. Raketenmotor (14) nach Anspruch 1, wobei:
eine Düsenanordnung (100) ein Halsbarrierenbauteil (110) zum Versperren des Düsendurchgangs umfasst, wenn die Zündanordnung (80) in der inaktiven Position ist;
in dem inaktiven Zustand die Zündanordnung (80) innerhalb der Düsenanordnung (100) positioniert ist, und das Halsbarrierenbauteil (110) den Düsendurchgang versperrt; und
in dem aktiven Zustand der Düsendurchgang im wesentlichen durch das Halsbarrierenbauteil (110) nicht versperrt ist, um einen Durchfluss durch den Düsendurchgang zu ermöglichen.

3. Raketenmotor (14) nach Anspruch 2, weiterhin einen Gleitkolben (50) umfassend, der verschiebbar innerhalb der Heckanordnung (22) und dem zylindrischen Bereich (24) des Gehäuses (23) zurückgehalten ist, um von einer Ruheposition (a) in Richtung einer Maximaldruckposition beweglich zu sein, in welcher der erste Treibstoffeinsatz (26) axialkomprimiert ist, um den ersten Treibstoffeinsatz (26) in Richtung des zylindrischen Bereichs (24) des Gehäuses (23) zu expandieren, als Reaktion auf das Zünden des Raketenmotors (14) und (b) danach in Reaktion auf die Expansion des ersten Treibstoffeinsatzes (26) aufgrund erhöhter externer Temperatur, wobei:
die Öffnung des Heckverschlussbauteils (32) eine zentrale Öffnung ist, und
die Düsenanordnung (100) verschiebbar innerhalb einer zentralen Bohrung des gleitenden Kolbens (50) befestigt ist, wobei der Düsendurchgang der Düsenanordnung (100) ein zentraler Düsendurchgang ist.

4. Raketenmotor (14) nach irgendeinem der Ansprüche 1-3, weiterhin einen Kunststoffisolator (90) umfassend, der einen sich radial erstreckenden Abschnitt und einen sich axial erstreckenden Abschnitt umfasst, wobei der sich radial erstreckende Abschnitt des Kunststoffisolators (90) sich zwischen dem ersten Treibstoffeinsatz (26) und dem Heckverschlussbauteil (32) befindet, und wobei sich die axiale Ausdehnung zwischen dem ersten Treibstoffeinsatz (26) und dem zylindrischen Bereich (24) des Gehäuses (23) befindet.

5. Raketenmotor (14) nach Anspruch 4, wobei die axiale Ausdehnung des Kunststoffisolators (90) radial von dem zylindrischen Bereich (24) des Gehäuses (23) beabstandet ist, um einen zylindrischen Hohlraum dazwischen zu bilden.

6. Raketenmotor nach irgendeinem der Ansprüche 1-3, wobei der thermische Expansionstemperaturbereich des ersten Treibstoffeinsatzes ausgewählt ist, um das freie Volumen des Gehäuses (23) mit dem ersten Treibstoffeinsatz (26) bei ungefähr 66°C zu füllen.

7. Raketenmotor (14) nach irgendeinem der Ansprüche 1-3, wobei die Selbstentzündungstemperatur des ersten Treibstoffeinsatzes bei ungefähr 238°C liegt.

8. Raketenmotor (14) nach irgendeinem der Ansprüche 1-3, wobei das Halsbarrierenbauteil (110) ein erosives Düsenstück umfasst.

9. Raketenmotor (14) nach irgendeinem der Ansprüche 1-3, wobei die Selbstentzündungstemperatur der unempfindliche Munitionsladung (150) zumindest bei 56°C unterhalb der Selbstentzündungstemperatur des ersten Treibstoffeinsatzes (26) liegt.

10. Raketenmotor (14) nach irgendeinem der Ansprüche 1-3, wobei der interne Druck, der durch die Selbstentzündung der unempfindlichen Munitionsladung (150) freigesetzt wird, nicht mehr als 25 % des internen Drucks beträgt, der durch die thermische Expansion des ersten Treibstoffeinsatzes (26) aufgebracht wird.

11. Raketenmotor (14) nach irgendeinem der Ansprüche 1-3, wobei sich die unempfindliche Munitionsladung (150) zwischen dem Heckverschlussbauteil (32) und dem ersten Treibstoffeinsatz (26) befindet.

12. Raketenmotor (14) nach irgendeinem der Ansprüche 1-3, weiterhin einen Kunststoffisolator (90) umfassend, der einen sich radial erstreckenden Abschnitt umfasst, der sich zwischen dem ersten Treibstoffeinsatz (26) und dem Heckverschlussbauteil (32) befindet, wobei sich die unempfindliche Munitionsladung (150) in Kontakt mit dem sich radial erstreckenden Abschnitt des Kunststoffisolators (90) befindet.

13. Raketenmotor (14) nach irgendeinem der Ansprüche 1-3, weiterhin eine zweite unempfindliche Munitionsladung (200) umfassend, die sich in der Nähe einer Heckoberfläche des ersten Treibstoffeinsatzes (26) befindet, wobei die zweite unempfindliche Munitionsladung (200) eine Selbstentzündungstemperatur aufweist, bei welcher die zweite unempfindliche Munitionsladung (200) sich selbst entzündet, um Gas freizusetzen, und wobei die Selbstentzündungstemperatur der zweiten unempfindlichen Munitionsladung (200) unter der Selbstentzündungstemperatur des ersten Treibstoffeinsatzes liegt, aber höher als die Selbstentzündungstemperatur der unempfindlichen Munition.

14. Raketenmotor (14) nach Anspruch 3, weiterhin einen Kunststoffisolator (90) umfassend, der einen sich radial erstreckenden Abschnitt umfasst, der sich zwischen dem ersten Treibstoffeinsatz (26) und dem Heckverschlussbauteil (32) befindet, wobei:
die unempfindliche Munitionsladung (150) sich in Kontakt mit dem sich radial erstreckenden Abschnitt des Kunststoffisolators (90) befindet; und
der gleitende Kolben (50) einen sich radial erstreckenden Flansch (60) mit einer vorderen Oberfläche umfasst, auf welcher sich der radial erstreckende Abschnitt des Kunststoffisolators (90) befindet.

15. Raketenmotor (14) nach Anspruch 14, wobei der sich radial erstreckende Flansch (60) des gleitenden Kolbens (50) eine hintere Oberfläche (68) aufweist und der gleitende Kolben (50) einwärts von der zentralen Öffnung beabstandet ist, um eine kreisförmige Kammer zu definieren, die zwischen der hinteren Oberfläche (68) und der Atmosphäre offen ist.

16. Projektil (10), welches durch eine Pistole oder eine ähnliche Waffe abfeuerbar ist, wobei das Projektil umfasst:
den Raketenmotor (14) nach irgendeinem der Ansprüche 1-15; und
eine Vorderteilstruktur (12), die eine Sprengladung beinhaltet und mit dem Raketenmotor (14) gekoppelt ist.

## Revendications

1. Propulseur pour roquette (14) possédant une capacité de munitions insensibles, le propulseur pour roquette (14) comprenant un carter (23) comprenant une région cylindrique (24), une extrémité avant fermée (20) et un ensemble arrière (22), l'ensemble arrière (22) comprenant un élément de fermeture arrière (32) pourvu d'une ouverture, le carter (23) pouvant être rompu à un niveau d'explosion de pression interne, un ensemble tuyère (100) couplé au carter (23), l'ensemble tuyère (100) comprenant un passage de tuyère, **caractérisé par** :
un bloc de poudre principal (26) contenu dans le carter (23) et ayant une température d'auto-inflammation à laquelle le bloc de poudre principal (26) s'auto-enflamme, le bloc de poudre principal (26) étant formulé pour subir une dilatation thermique en réponse à un chauffage à des températures en dessous de la température d'auto-inflammation de sorte à remplir le volume libre, le cas échéant, à l'intérieur du carter (23) et à appliquer une pression interne au carter (23) qui est inférieure au niveau d'explosion de pression interne ;
un ensemble allumeur (80) opérationnel entre un état inactif, dans lequel le passage de tuyère est obstrué, et un état activé, dans lequel l'ensemble allumeur (80) enflamme le bloc de poudre principal (26) et le passage de tuyère est sensiblement non obstrué pour permettre l'écoulement à travers le passage de tuyère ; et
une charge de munitions insensibles (150) située à l'intérieur du carter (23) et ayant une température d'auto-inflammation des munitions insensibles à laquelle la charge de munitions insensibles (150) s'auto-enflamme pour libérer du gaz, la température d'auto-inflammation des munitions insensibles étant inférieure à la température d'auto-inflammation de l'agent propulsif principal, la charge de munitions insensibles (150) étant présente en une quantité efficace de telle sorte que le gaz libéré par l'auto-inflammation de la charge de munitions insensibles (150) se combine avec la pression interne appliquée par la dilatation thermique du bloc de poudre principal (26) lorsque l'ensemble allumeur (80) est dans l'état inactif pour faire monter la pression interne à l'intérieur du carter (23) au-dessus du niveau d'explosion de pression interne pour rompre le carter (23) avant que le bloc de poudre principal (26) n'atteigne sa température d'auto-inflammation.

2. Propulseur pour roquette (14) selon la revendication 1, dans lequel :
l'ensemble tuyère (100) comprend un élément de barrière de col (110) pour obstruer le passage de tuyère lorsque l'ensemble allumeur (80) est dans la position inactive ;
dans l'état inactif, l'ensemble allumeur (80) est positionné à l'intérieur de l'ensemble tuyère (100) et l'élément de barrière de col (110) obstrue le passage de tuyère ; et
dans l'état actif, le passage de tuyère est sensiblement non obstrué par l'élément de barrière de col (110) pour permettre l'écoulement à travers le passage de tuyère.

3. Propulseur pour roquette (14) selon la revendication 2, comprenant en outre un piston coulissant (50) retenu de manière coulissante à l'intérieur de l'ensemble arrière (22) et la région cylindrique (24) du carter (23) de manière à être mobile d'une position de repos (a) vers l'avant vers une position de pression maximale dans laquelle le bloc de poudre principal (26) est comprimé axialement pour dilater radialement le bloc de poudre principal (26) vers la région cylindrique (24) du carter (23) en réponse à la mise à feu du propulseur pour roquette (14), et (b) ensuite, en réponse à la dilatation du bloc de poudre principal (26) causée par des températures externes élevées, dans lequel :
l'ouverture de l'élément de fermeture arrière (32) est une ouverture centrale, et
l'ensemble tuyère (100) est monté de manière coulissante dans un alésage central du piston coulissant (50), le passage de tuyère de l'ensemble de tuyère (100) étant un passage de tuyère central.

4. Propulseur pour roquette (14) selon l'une quelconque des revendications 1 à 3, comprenant en outre un isolant en caoutchouc (90) comprenant une partie s'étendant radialement et une extension axiale, la partie de l'isolant en caoutchouc s'étendant radialement (90) étant située entre le bloc de poudre principal (26) et l'élément de fermeture arrière (32), l'extension axiale étant située entre le bloc de poudre principal (26) et la région cylindrique (24) du carter (23).

5. Propulseur pour roquette (14) selon la revendication 4, dans lequel l'extension axiale de l'isolant en caoutchouc (90) est espacée radialement de la région cylindrique (24) du carter (23) pour former une zone de vide cylindrique entre elles.

6. Propulseur pour roquette selon l'une quelconque des revendications 1 à 3, dans lequel la plage de températures de dilatation thermique du bloc de poudre principal est choisie de sorte à remplir le volume libre du carter (23) avec le bloc de poudre principal (26) à environ 66 °C.

7. Propulseur pour roquette (14) selon l'une quelconque des revendications 1 à 3, dans lequel la température d'auto-inflammation du bloc de poudre principal est d'environ 238 °C.

8. Propulseur pour roquette (14) selon l'une quelconque des revendications 1 à 3, dans lequel l'élément de barrière de col (110) comprend une pièce de tuyère érosive.

9. Propulseur pour roquette (14) selon l'une quelconque des revendications 1 à 3, dans lequel la température d'auto-inflammation de la charge de munitions insensibles (150) est d'au moins environ 56 °C en dessous de la température d'auto-inflammation du bloc de poudre principal (26).

10. Propulseur pour roquette (14) selon l'une quelconque des revendications 1 à 3, dans lequel la pression interne libérée par l'auto-inflammation de la charge de munitions insensibles (150) ne dépasse pas 25 % de la pression interne appliquée par la dilatation thermique du bloc de poudre principal (26).

11. Propulseur pour roquette (14) selon l'une quelconque des revendications 1 à 3, dans lequel la charge de munitions insensibles (150) se trouve entre l'élément de fermeture arrière (32) et le bloc de poudre principal (26).

12. Propulseur pour roquette (14) selon l'une quelconque des revendications 1 à 3, comprenant en outre un isolant en caoutchouc (90) comprenant une partie s'étendant radialement située entre le bloc de poudre principal (26) et l'élément de fermeture arrière (32), dans lequel la charge de munitions insensibles (150) se trouve en contact avec la partie de l'isolant en caoutchouc s'étendant radialement (90).

13. Propulseur pour roquette (14) selon l'une quelconque des revendications 1 à 3, comprenant en outre une charge de munitions insensibles secondaire (200) positionnée à proximité immédiate d'une surface arrière du bloc de poudre principal (26), la seconde charge de munitions insensibles (200) ayant une température d'auto-inflammation à laquelle la seconde charge de munitions insensibles (200) s'auto-enflamme pour libérer du gaz, la température d'auto-inflammation de la seconde charge de munitions insensibles (200) étant inférieure à la température d'auto-inflammation de l'agent de propulsion principal mais supérieure à la température d'auto-inflammation des munitions insensibles.

14. Propulseur pour roquette (14) selon la revendication 3, comprenant en outre un isolant en caoutchouc (90) comprenant une partie s'étendant radialement située entre le bloc de poudre principal (26) et l'élément de fermeture arrière (32), dans lequel :
la charge de munitions insensibles (150) se trouve en contact avec la partie de l'isolant en caoutchouc s'étendant radialement (90) ; et
le piston coulissant (50) comprend un rebord s'étendant radialement (60) ayant une surface avant sur laquelle se trouve la partie de l'isolant en caoutchouc s'étendant radialement (90).

15. Propulseur pour roquette (14) selon la revendication 14, dans lequel le rebord (60) du piston coulissant (50) s'étendant radialement a une surface arrière (68) et le piston coulissant (50) est espacé vers l'intérieur par rapport à l'ouverture centrale pour définir une chambre annulaire ouverte entre la surface arrière (68) et l'atmosphère.

16. Projectile (10) pouvant être lancé par un canon ou autre arme similaire, le projectile comprenant :
le propulseur pour roquette (14) selon l'une quelconque des revendications 1 à 15 ; et
une structure d'extrémité avant (12) contenant une charge utile et couplée au propulseur pour roquette (14).
